# EUROPEAN PATENT APPLICATION

(11) **EP 3 771 957 A1**
(43) Date of publication of application: **03.02.2021**
(21) Application number: 19189219.9
(22) Date of filing: 30.07.2019
(51) Int. Cl.: G05D 23/19, G05B 1/00, F24F 1/00, F24F 11/00, G05B 13/04

(54) **METHOD AND SYSTEM FOR CONTROLLING OF HEATING, VENTILATION AND AIR CONDITIONING**

(71) Applicant: Vemmio Spólka Z Ograniczona Odpowiedzialnoscia, 40-778 Katowice (PL)
(72) Inventor: Borówka, Maciej, 40-750 Katowice (PL); Ko osowski, Artur, 42-500 B dzin (PL); Pawe czyk, Marek, 42-582 Rogo nik (PL); Kozyra, Andrzej, 40-871 Katowice (PL); Grychowski, Tomasz, 40-710 Katowice (PL); Wrona, Stanis aw, 44-122 Gliwice (PL); Wiora, Józef, 47-113 Staniszcze Ma e (PL)
(74) Representative: Wroblewski, Marcin Jan

(57) **Abstract**

Predictive control system for heating, ventilation and air conditioning comprising controller (20), which comprises: superior layer (21) comprising a comfort questions module (211), a user preference information module (212) and a master algorithm module (213); direct higher layer (22) comprising the dynamic models module (221) and the room regulator module (222); a direct lower layer (23) comprising a heat flux estimator module (231) and a device control module (232); microprocessor; room presence detectors (24), at least one actuator (25), data bus connected to memory and microprocessor.

Computer-implemented predictive control method for heating, ventilation and air conditioning installations, in which in the superior layer (21) time course of the setpoint of the controlled quantity is determined (101) on the data base from the user regarding comfort, usual hours on the premises and fuzzy inference, (102) the time course of the setpoint of the controlled quantity is transmitted to the direct higher layer. In the direct higher layer (22) the parameters of the room model are continuously adapted (103) based on recorded control runs, controlled quantity and environmental parameters, using the evolutionary algorithm with local optimization, using the room model, the initial advanced reaction time is identified (104), the forecasted time course of the controlled quantity is determined (105), the advanced response time is optimized (106) by minimizing the error integral between the forecasted course of the controlled quantity and the time course of the controlled value setpoint, the optimal value of the time of advanced reaction and the shifted time course of the setpoint to the direct lower layer are transferred (107). In the direct lower layer (23) regulation (108) is made with the optimal time of advanced reaction, the value of the controlled quantity based on the shifted time course of the setpoint.

## Description

### Technical field

The subject of the invention is the method and system for controlling heating, ventilation and air conditioning.

### Prior art

The US patent US9851728B2 describes an environmental conditioning system using intelligent controllers, and in particular, an intelligent HVAC system for detecting and correcting the control coupling between intelligent thermostats. This system comprises versatile sensing and control units (VSCUs) that are adapted to calculate the predicted time / temperature ratio in order to set the current temperature. In addition, the said sensors are adapted to learn the behavior of system users based on the so-called machine learning, or advanced algorithms of optimization, control of external and internal environment conditions, and creation of a thermal and thermodynamic model of a building in order to optimize its energy consumption. The system is able to constantly monitor the building occupancy status in order to regulate the set temperature outside the standard thermostat schedule. Furthermore, the system can determine the temperature course based on current data being gathered on an ongoing basis.

The US patent US10012407B2 describes a system and method for controlling heating systems to minimize overdriving and sub-effects, and in particular mentions intelligent thermostats using model predictive control. The said system creates a parameterized temperature model, taking into account environmental conditions at the use of which the expected ambient temperature of the building is determined in response to the radiant heating control strategy in order to minimize the costs of energy consumption. The created global model can be continuously improved using more data, and the system is able to automatically change the temperature. The proposed control method works based on established temperature control strategies, leading to the reduction of over-regulation.

The US patent US2017241657A1 describes a heating, ventilation and air conditioning system comprising an installation along with multiple single controllers which affect environmental conditions in a building. The said controllers can set the setpoint for a given variable (e.g. by minimizing the difference between the measured or calculated input value and the setpoint) and/or optimize a given variable (e.g. by maximizing or minimizing the output variable).

The international patent application PCT WO2019063079A1 describes a system, device and method for optimizing energy and comfort in a building automation environment. This system comprises an element analyzing the energy status, based on the current state of the building automation environment from the status analyzer, determines energy compensation vectors for a set of statuses with energy profiles, wherein the status of the environment should be understood as the presence of people in rooms, user profile, energy consumed from energy sources, plug load, etc. In addition, the system generates a building model that represents a virtual representation of the building automation environment.

The international patent application PCT WO2013043863A1 describes a system and method for managing one or more buildings, comprising collecting historical data on a building, data on a building in real time, historical exogenous data and real-time exogenous data, and gathering the collected data in an adaptive stochastic controller. In addition, the system enables optimization of the heating, ventilation and air conditioning system as well as analysis of occupancy patterns, tenant behavior and space characteristics, and moreover allows identification of tenant behavior which corresponds to temperature changes in different spaces (e.g. total tenant space, floors, conference rooms, cabins and traditional offices). In turn, the said controller is adapted to collect data such as air flow rates, information on the air supply temperature or information on the return air temperature. What's more, the stochastic controller allows you to generate a predictive model, for example a predictive machine learning model. This model can also be created, for example, on the basis of neural networks.

The commonly used control systems for heating, ventilation and air conditioning allow reactions only after the occurrence of a deviation from the given climate conditions in the room, which in turn requires a higher energy expenditure to restore the desired climate conditions. In addition, users of such systems are often unable to enter into the control algorithm the correct values that are necessary for the correct operation of the control system.

Therefore, it is advisable to create a solution that will optimize the control process of heating, ventilation and air conditioning installations while simplifying it and increasing its efficiency.

### Summary

The invention relates to predictive control system for heating, ventilation and air conditioning comprising controller. Controller comprises superior layer comprising a comfort questions module, a user preference information module and a master algorithm module. Direct higher layer of the controller comprises the dynamic models module and the room regulator module. A direct lower layer of the controller comprises a heat flux estimator module, a device control module and microprocessor. Controller also comprises a room presence detectors, at least one actuator and data bus connected to memory and microprocessor.

Preferably the actuator (25) is a heating device.

Preferably the actuator (25) is a cooling device.
The invention also relates to computer-implemented predictive control method for heating, ventilation and air conditioning installations, in which in the superior layer time course of the setpoint of the controlled quantity is determined on the data base from the user regarding comfort, usual hours on the premises and fuzzy inference, the time course of the setpoint of the controlled quantity is transmitted to the direct higher layer. In the direct higher layer the parameters of the room model are continuously adapted based on recorded control runs, controlled quantity and environmental parameters, using the evolutionary algorithm with local optimization. Using the room model, the initial advanced reaction time is identified and the forecasted time course of the controlled quantity is determined (105). Further the advanced response time is optimized by minimizing the error integral between the forecasted course of the controlled quantity and the time course of the controlled value setpoint and then the optimal value of the time of advanced reaction and the shifted time course of the setpoint to the direct lower layer are transferred. In the direct lower layer regulation is made with the optimal time of advanced reaction, and the value of the controlled quantity based on the shifted time course of the setpoint.

Preferably data from the user regarding comfort are obtained via the comfort questions module, which combines a descriptive assessment of the comfort feeling with the numerical values of the controlled quantity.

Preferably data on the usual hours users stay in their room are obtained automatically, without the participation of users, using room presence detectors and statistical analysis.

Preferably the controlled quantity represents the room temperature.

Preferably the controlled quantity represents the humidity in the room.

The invention further relates to the computer program comprising means of the program code for performing all steps of a computer-implemented method according to the invention, when the said program is running on a computer.

The invention also relates to the computer-readable medium storing computer-implemented instructions for performing all the steps of a computer-implemented method according to the invention, wherein such method is implemented on a computer.

### The advantages of the invention

The solution according to the invention allows for an automatic identification of the room model and user habits, at the same time requiring minimal initial information from the users themselves.

The full simulation of the room model allows to reliably and easily predict the most favorable time to react in advance in the control algorithm.

### Description of the figures

The subject of the invention is shown in the embodiments in the drawing, in which:
Fig. 1 schematically shows the predictive control method according to the invention;
Fig. 2 shows a schematic diagram of an exemplary system for implementing the predictive control method according to the invention;
Fig. 3 shows a schematic of the fuzzy inference algorithm in the superior layer;

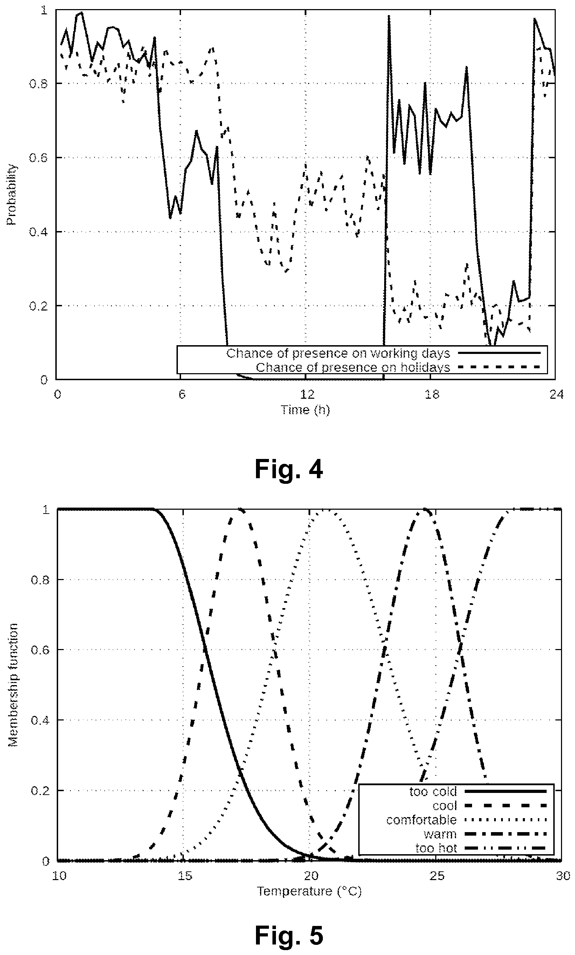

Fig. 4 shows an example of a user presence probability function in a selected room per unit of time;
Fig. 5 shows an example of a membership function of fuzzy sets calculated on the basis of collected user data;

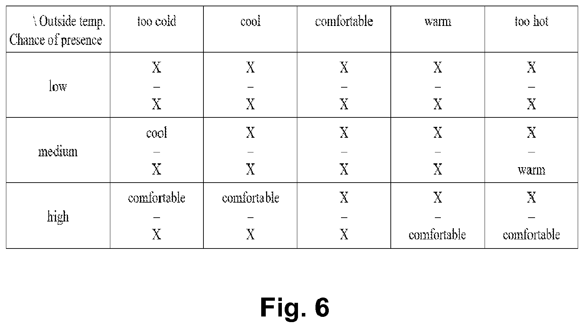

Fig. 6 shows a list of rules applied in a fuzzy inference system;
Fig. 7 shows a schematic diagram of a memetic algorithm;
Fig. 8 conceptually shows control paths for an exemplary fragment of a dwelling house;
Fig. 9 conceptually shows the disturbance (compensation) paths for an exemplary fragment of a dwelling house;

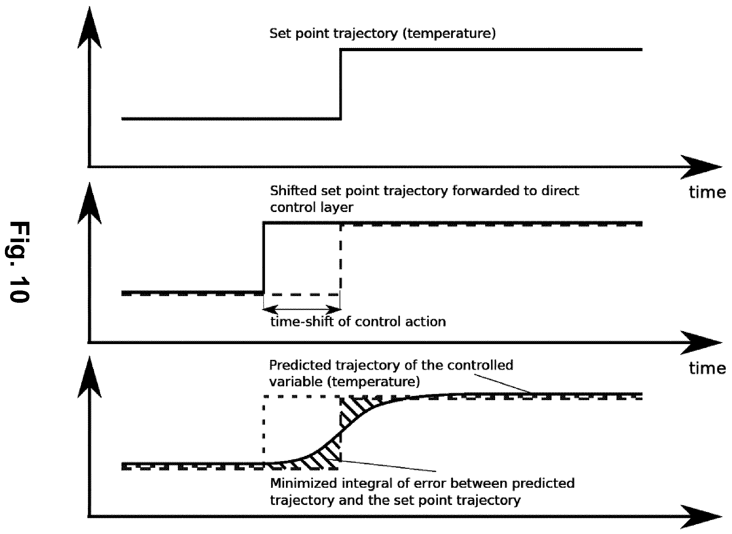

Fig. 10 shows a schematic time course of the control algorithm and determination of the forecast lead time;
Fig. 11A shows exemplary time courses of the setpoint and current room temperature and the setpoint for the heater, as well as the current temperature of the heater for prediction-free control;
Fig. 11B shows exemplary time courses of the accelerated setpoint, setpoint and current room temperature and the setpoint for the radiator, as well as the current temperature of the radiator for predicted control;
Fig. 11C shows exemplary course of interferences affecting the size of the control value.

### Notation and nomenclature

Some parts of the detailed description below are presented as part of the procedures, data processing steps or other representations of symbolic operations on bit data which can be performed in the computer's memory. Therefore, the logical steps are performed by the computer, which requires physical manipulation of physical quantities. Typically, these quantities take the form of electrical or magnetic signals that are suitable for storing, transmitting, connecting, comparing or otherwise manipulating data in a computer system. Due to the widespread use, these data are defined as signals, time courses, bits, packets, messages, values, elements, symbols, signs, terms, numbers and the like. In addition, all of these terms, or the like, should be identified with their corresponding physical quantities, and they merely constitute convenient descriptions of these physical quantities. Terms such as "processing" or "creating" or "transmitting" or "performing" or "determining" or "detecting" or "receiving" or "selecting" or "calculating" or "generating" or the like, refer to the actions and computer system processes which manipulate and transform data represented as physical (electronic) quantities in computer memories and registers into other data similarly represented as physical quantities in memories or registers or other information storages. A computer readable medium (memory) as defined herein, may typically be nonvolatile and/or include a nonvolatile device. In this context, a nonvolatile storage medium may include a device that may be physical, which means that the device has a specific physical form, although the device may change its physical state. Thus, for example, the term nonvolatile refers to a device which remains physical, although it changes its state.

### Embodiments

### Predictive control method

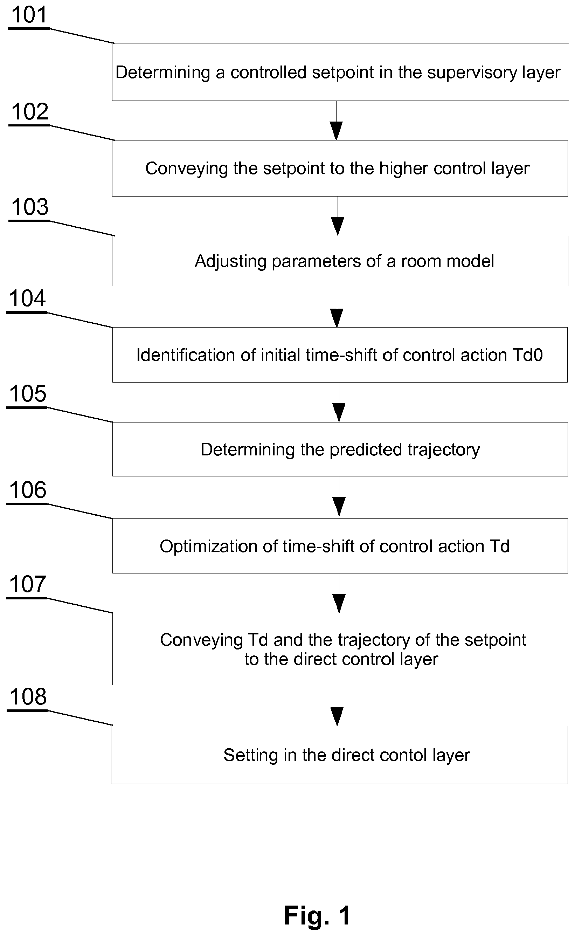

Fig. 1 schematically shows a computer-implemented predictive control method for heating, ventilation and air conditioning installations.

In the method according to the invention, the time course (time trajectory) of the setpoint representing a given room temperature, i.e. temperature values in the time function which should be achieved in the future, is determined 101 on the basis of data obtained from the user 26 of the system 2 pertaining to comfort, the usual number of hours spent in a building or specific rooms of the building and fuzzy inference. Next, the said time course (time trajectory) of the setpoint value of the controlled variable is transmitted 102 to the direct higher layer 22.

In the next step, according to the said method, the parameters of the room model are continuously adapted 103 based on the recorded control runs, controlled quantities and environmental parameters, using an evolutionary algorithm with local optimization. Further, the initial Td0 reaction time is identified 104 using the room model, and the predicted time course (time trajectory) of the controlled quantity is determined 105 - that is heat fluxes for individual rooms, to then optimize the Td reaction time by minimizing the error integral between the forecasted controlled quantity the and time course of the controlled setpoint value. At the beginning, the Td0 advanced time is assumed to be zero which is related to the delayed reaction of the control algorithm (the control would be triggered at the moment the temperature in the room should already be raised or lowered). Then, a full simulation of the room model controlled by the direct lower layer 23 is conducted, and the said error integral is calculated between the predicted course of the controlled value (temperature) and the setpoint trajectory. Next, the Td advanced time is increased by the assumed step, for example 15 minutes, and another full simulation is carried out within the assumed time horizon. Further values of the Td advanced time are evaluated until its further increase does not bring benefits (reduction of the error integral) or even worsens the result.

Full simulation of the model means that the model accepts the start conditions being the actual current state of the real object, and then, in subsequent simulation steps, it is based on the values calculated independently in the previous simulation steps. To determine the value of the control signal in the simulation, the PID controller equation implemented in the direct lower layer 23 is used.

Next, in step 107, the optimum Td advanced reaction time value and the shifted time course of the setpoint to the direct lower layer 23 are transmitted, in which layer regulation 108 is made with the optimal Td advanced reaction time, the values of the controlled quantity of the system actuators 2 (e.g. valve opening for the radiator) based on the offset time course of the setpoint. Thus, the optimal Td advanced time is the time by which the information on the setpoint trajectory is accelerated (shifted in time) for the direct lower layer 23. The control law in the direct lower layer regulators is based on the PID algorithm or similar.

### Fuzzy inference

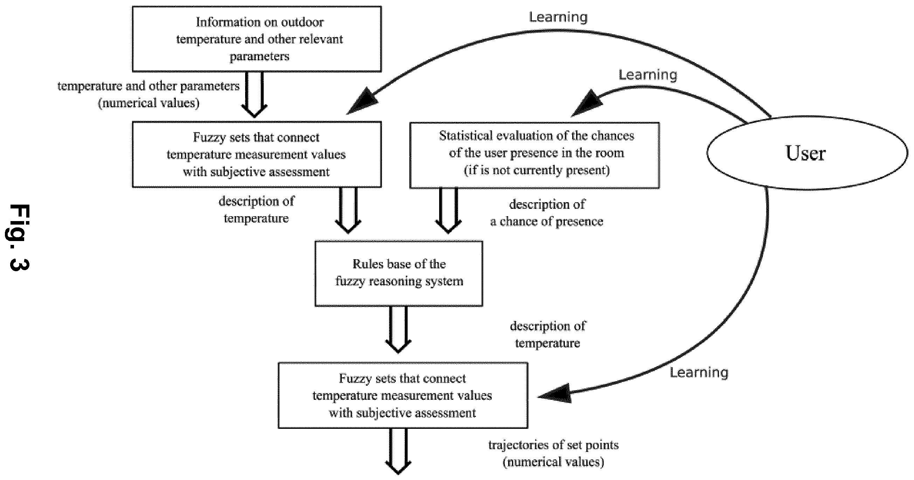

An exemplary schematic of the fuzzy inference algorithm is shown in Fig. 3. The outdoor temperature information along with other relevant parameters, such as, for example, the illumination (insolation) information in the form of numerical values, goes to the fuzzy sets linking the temperature measurements with the subjective assessments of the user 26 of the system 2, as a result of which temperature description values are created. These values, together with a statistical assessment of the occupant's chances of staying in a specific room in the building (if not currently present), create a descriptive chance of the user's presence and go to the fuzzy inference rule base. While performing these activities, the algorithm learns the user's 26 preferences in order to be able to provide him/her with the most comfortable conditions for staying in a specific room of the building.

### Adaptation of the room model parameters

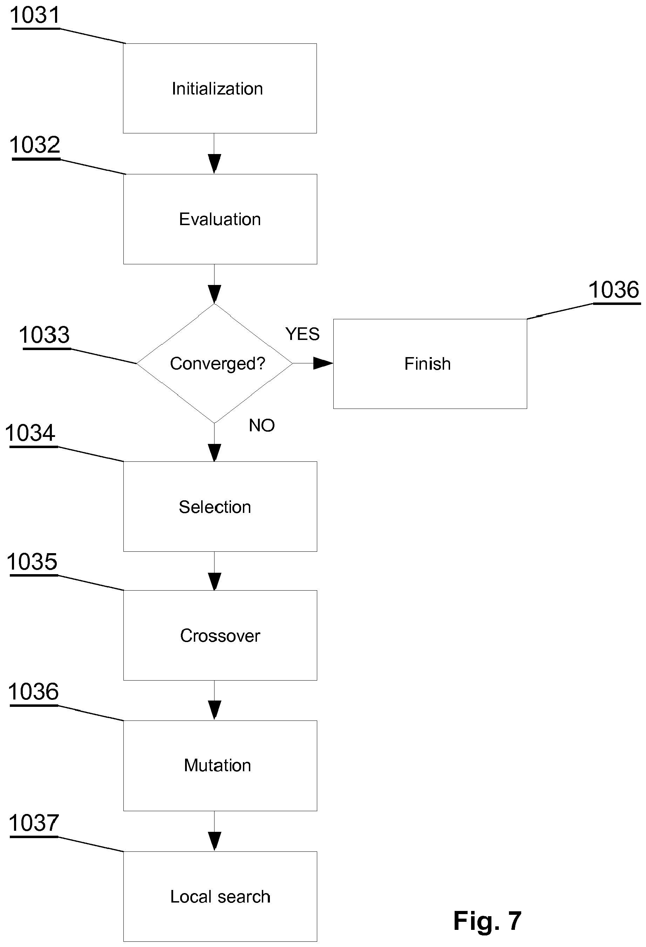

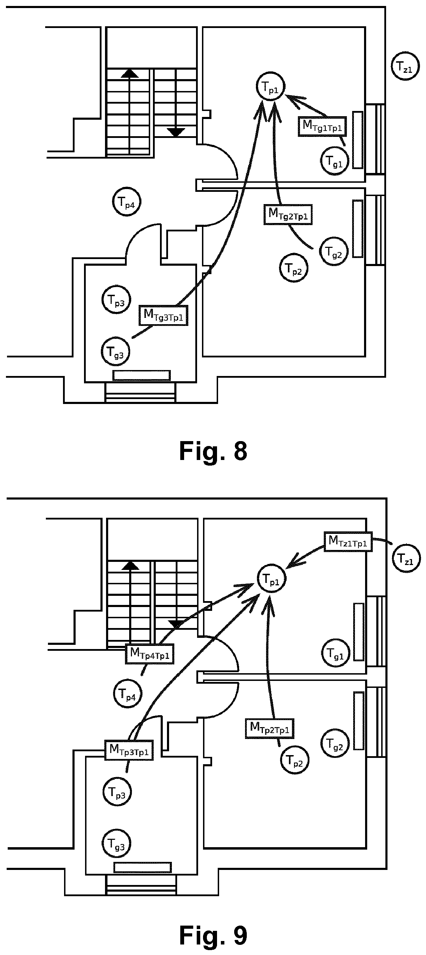

Adaptation of the room model parameters is a continuous action in order to keep up with any changes in the building's parameters over time. The room model contains control paths (links between actuating elements of the heating/cooling system, e.g. radiators and room temperature, i.e. controlled quantity) and disturbance paths (connections between external parameters, e.g. outdoor temperature or insolation, and controlled quantity). An exemplary representation of the control paths and disturbance paths is shown in Fig. 8 and Fig. 9. The initial structure of the model presupposes the presence of all possible control and disturbance paths. Should the selected paths be very poorly linked (correlated) with the controlled value, they are eliminated from the model. The dynamics of each room is modeled as a second order inertial delay. In turn, the parameters of each path are identified by means of a memetic algorithm, i.e. an evolutionary algorithm with local optimization, which is shown in Fig. 7.

### Memetic algorithm

At the beginning, a population of initial solutions is drawn 1031 (many sets of random parameters, however, from a physically justified range). Next, an evaluation 1032 is conducted, so it is assessed 1033 whether the models match the experimental data, and the best parameter sets (individuals) are selected 1034 for crossing 1035. As part of the crossing 1035, new solutions are generated, however, they show features of the best solutions from the previous generation. In turn, the weakest (the most badly fitted) individuals are rejected. In the next stage, mutation 1035 is performed, i.e. a random change in the selected parameters of some individuals. In the last stage local optimization 1037 is performed, i.e. for selected individuals selected parameters are slightly improved in the direction that shows improvement (known as hill climbing). Local optimization is carried out for as long as any slight change in any parameter results in the solution becoming worse. This stage ends the iteration of the algorithm and then the next iteration begins, starting from the evaluation 1032 step. Iterations are performed until the end condition is met: no improvement after successive iterations or reaching the maximum number of iterations.

### Operation of the control system

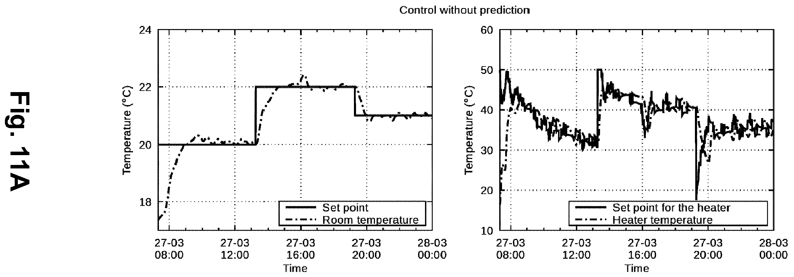

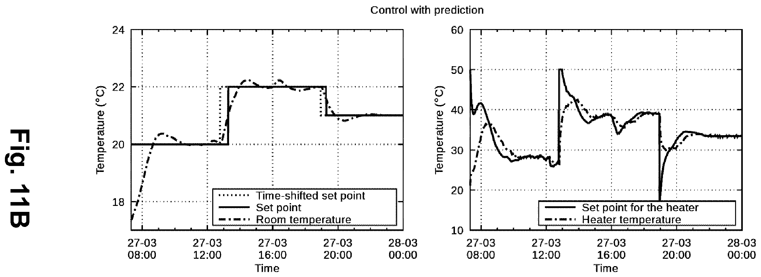

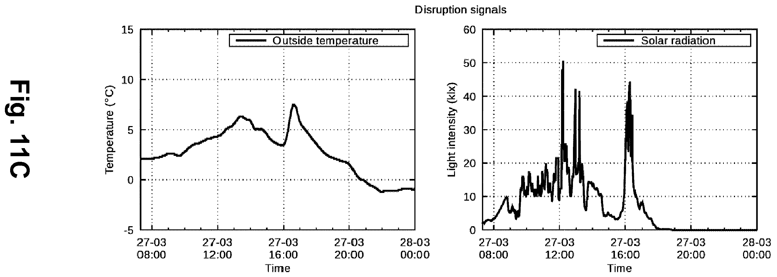

An example of how the control system works in the form of time courses is shown in Figures 11A to 11C. In Figure 11A, the signal waves of the setpoint and controlled values respectively, without the use of prediction, are represented by continuous and dashed lines. For the same input data, a simulation of the predictive control system was performed, where the advanced time was optimized, as shown in Figure 11B. The setpoint shifted in time was marked with a dotted line, and the course of the controlled value obtained for it was marked with a dashed line. The subsequent charts show graphs of control signals and signals used in the disturbance paths.

### An exemplary system for implementing the predictive control method

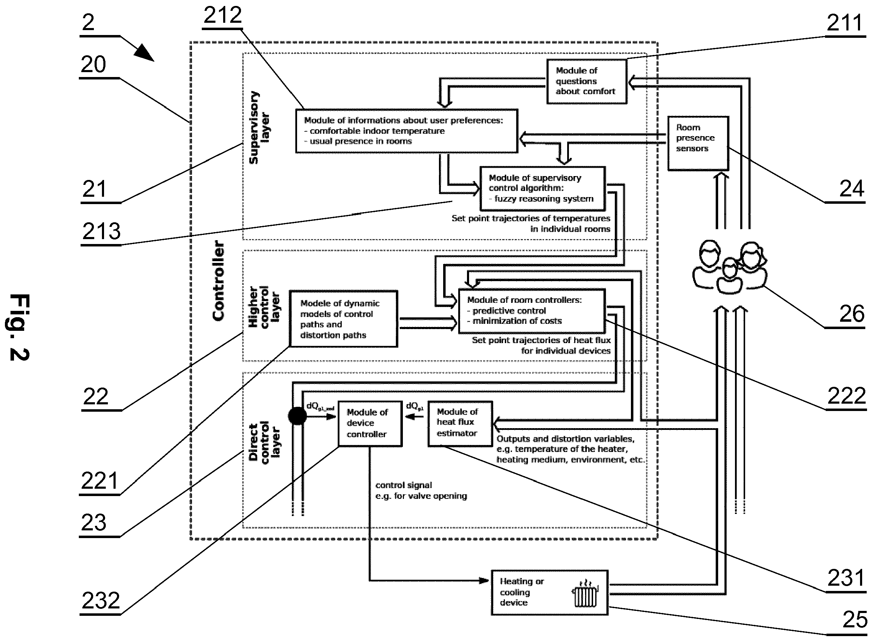

Fig. 2 shows a schematic diagram of an exemplary system for implementing a predictive control method. The heating, ventilation and air conditioning control system 2 comprises a controller 20, room presence detectors 24 and at least one actuator 25, in particular a heating and/or cooling device.

The system 2 also comprises a controller 20 and a data bus connected to the memory and a microprocessor connected to the memory being part of the controller (not indicated in the figure). In addition, all of the system 2 components are connected to the data bus in such a way that they can be managed by the controller 20 and the microprocessor contained therein.

The room presence detectors 24 are adapted to collect data on the usual hours of occupancy of users 26 in rooms, for which these data are obtained automatically, without the participation of users 26.

In addition, these data are obtained on the basis of statistical analysis, and its result is the percentage of the user's 26 chance of staying in a building or room (this assessment can be calculated in a 60-, 30- or 15-minute time resolution).

The memory may store a computer program or multiple programs implemented by the controller 20 and the microprocessor included therein in order to implement the steps of the predictive control method.

Furthermore, the controller 20 comprises three functional layers:
- superior layer 21,
- direct higher layer 22,
- direct lower layer, 23.

The superior layer 21 contains a question module about comfort 211, an information module about user preferences 212, and a master algorithm module 213.

The module with comfort 211 questions is adapted to obtain from the system user 26 comfort data using a fuzzy inference algorithm which works on the basis of fuzzy set parameters combining a descriptive assessment of the comfort experience with numerical values of the controlled quantity.

The user 26 answers questions about comfort, but his answers are to be descriptive, for example cold, cool, comfortable, warm and hot. The user 26 of the system 2 does not operate on numerical values (degrees), because often the range of comfort given with their use is not in line with its later assessment.

The user preference information module 212 is adapted to collect information about system 2 users such as comfortable room temperature or the usual indoor presence.

The master algorithm module 213 is adapted to determine the time course (time trajectory) of the controlled value setpoint using the fuzzy inference algorithms.

The direct higher layer 22 contains the dynamic models module 221 and the room regulator module 222.

The dynamic models module 221 of control paths and disturbance paths is adapted to continuously adjust the parameters of the room model based on recorded control runs, controlled quantity and environmental parameters, using the evolutionary algorithm with local optimization.

The room regulator module 222 is adapted to determine the forecasted time course of the controlled quantity - heat fluxes for individual rooms to then optimize the Td reaction time by minimizing the error integral between the forecasted controlled quantity the and time course of the controlled setpoint value.

The direct lower layer 23 contains a heat flux estimator module 231 and a device controller module 232.

The heat flux estimator module 231 is adapted to estimate the heat flux delivered by the device in a unvarying form, regardless of the actual type of heating and/or cooling device (e.g. for a heater the estimation is based on measuring the difference between the air temperature in the room and the surface temperature of the radiator multiplied by a predefined fixed value).

The controller module of the device 232 is adapted to control the value of the controlled quantity via the system 2 actuators (e.g. by adjusting the opening degree of the radiator valve) based on the shifted time course of the setpoint. The time course of the generated control (e.g. the valve's opening degree for the radiator) is remembered and used in the dynamic models module 221 of control paths and disturbance paths to adjust (adapt) the parameters of room models.

### Other features of the method and the system.

The application of the method is not limited to temperature control. The relative humidity or the degree of room ventilation can also be controlled. These quantities can be controlled independently or in connection with temperature.

Due to the fact that data on temperature, humidity or ventilation level and other room parameters are transformed for the purpose of subsequent control of the actual value of these parameters and due to the fact that data processing takes place in a dedicated programmable machine, the conditions "machine or transform test" conditions are met, and the idea is not abstract. One skilled in the art can easily see that the above-described method for controlling heating, ventilation and air conditioning can be made and/or controlled by means of one or more computer programs. Such computer programs are usually implemented by using computer resources in a computer device. Applications are stored on a nonvolatile carrier. An example of a non-transitory medium is nonvolatile memory, for example flash memory or volatile memory, for example RAM. Computer instructions are implemented by the processor. These memories are exemplary recording media for storing computer programs containing computer-implemented instructions that perform all the steps of a computer-implemented method according to the technical concept presented herein.

Although the method and system presented in this document have been illustrated, described, and defined with reference to specific embodiments, such references and implementation examples in the cited specification do not imply any limitation in the method and system presented. However, it shall be evident that various modifications and changes can be made to them without departing from the broader scope of the technical concept. The preferred embodiments presented herein are exemplary only, and do not exhaust the scope of the technical concepts set forth in this document.

Accordingly, the scope of protection is not limited to the preferred embodiments described in the specification.

## Claims

1. Predictive control system for heating, ventilation and air conditioning comprising:
- controller (20), which comprises:
- superior layer (21) comprising a comfort questions module (211), a user preference information module (212) and a master algorithm module (213);
- direct higher layer (22) comprising the dynamic models module (221) and the room regulator module (222);
- a direct lower layer (23) comprising a heat flux estimator module (231) and a device control module (232);
- microprocessor;
- room presence detectors (24),
- at least one actuator (25),
- data bus connected to memory and microprocessor.

2. The system according to claim 1. wherein the actuator (25) is a heating device.

3. The system according to claim 1. wherein the actuator (25) is a cooling device.

4. Computer-implemented predictive control method for heating, ventilation and air conditioning installations, in which:
in the superior layer (21)
- time course of the setpoint of the controlled quantity is determined (101) on the data base from the user regarding comfort, usual hours on the premises and fuzzy inference,
- (102) the time course of the setpoint of the controlled quantity is transmitted to the direct higher layer,
in the direct higher layer (22)
- the parameters of the room model are continuously adapted (103) based on recorded control runs, controlled quantity and environmental parameters, using the evolutionary algorithm with local optimization,
- using the room model, the initial advanced reaction time is identified (104),
- the forecasted time course of the controlled quantity is determined (105),
- the advanced response time is optimized (106) by minimizing the error integral between the forecasted course of the controlled quantity and the time course of the controlled value setpoint,
- the optimal value of the time of advanced reaction and the shifted time course of the setpoint to the direct lower layer are transferred (107),
in the direct lower layer (23)
- regulation (108) is made with the optimal time of advanced reaction, the value of the controlled quantity based on the shifted time course of the setpoint.

5. The method according to claim 4, in which data from the user regarding comfort are obtained via the comfort questions module, which combines a descriptive assessment of the comfort feeling with the numerical values of the controlled quantity.

6. The method according to claim 4, in which data on the usual hours users stay in their room are obtained automatically, without the participation of users, using room presence detectors and statistical analysis.

7. The method according to claim 4, in which the controlled quantity represents the room temperature.

8. The method according to claim 4, in which the controlled quantity represents the humidity in the room.

9. The computer program comprising means of the program code for performing all steps of a computer-implemented method according to any one of claims 4-8, when the said program is running on a computer.

10. The computer-readable medium storing computer-implemented instructions for performing all the steps of a computer-implemented method according to any of claims 4-8 implemented on a computer.
